# EUROPÄISCHE PATENTSCHRIFT

(11) **EP 4 368 868 B1**
(45) Veröffentlichungstag und Bekanntmachung des Hinweises auf die Patenterteilung: **28.10.2026**
(21) Anmeldenummer: 23208884.9
(22) Anmeldetag: 09.11.2023
(51) Int. Cl.: F16L 37/088, F16L 37/084, F16B 7/04, F16B 21/18

(54) **STECKVERBINDUNG ZUM ANSCHLUSS AN EIN AGGREGAT**
PLUG-IN CONNECTION FOR CONNECTION TO A UNIT
CONNECTEUR ENFICHABLE DESTINÉ À ÊTRE RACCORDÉ À UN AGRÉGAT

(30) Priorität: 11.11.2022 DE 102022129940
(43) Veröffentlichungstag der Anmeldung: 15.05.2024
(73) Patentinhaber: Johannes Schäfer vorm. Stettiner Schraubenwerke GmbH & Co. KG, 34510 Hungen (DE)
(72) Erfinder: Forro, Norbert, 35447 Reiskirchen (DE)
(74) Vertreter: Haarpatent Patentanwälte Krämer Meyer

(56) Entgegenhaltungen:
- EP-A1- 0 397 942
- DE-A1- 102005 046 886
- DE-A1- 102007 059 329
- DE-U1- 202008 009 931
- US-A- 5 918 913

## Beschreibung

Die Erfindung betrifft eine Steckverbindung für Rohrleitungen, wobei die Steckverbindung ein Steckteil und ein Aggregat mit einem Aufnahmeelement aufweist, wobei das Steckteil und das Aufnahmeelement miteinander verbindbar und wieder trennbar sind.

Es ist bekannt, Steckverbindungen zum lösbaren Verbinden von Leitungen, wie z. B. Rohr- oder Schlauchleitungen für hydraulische oder pneumatische Strömungs- bzw. Druckmedien, zu verwenden. Auch der Anschluss solcher Leitungen über Steckverbindungen an Aggregate ist möglich. Die Steckverbindungen haben gegenüber von Schraubverbindungen den Vorteil, dass der Anschluss von Leitungen wesentlich vereinfacht wird, da anstelle eines oft mühsamen und zeitraubenden Einschraubens an manchmal schwer zugängliche Stellen ein einziger Griff genügt, um eine Leitung anzuschließen.

Eine aus DE 10 2007 059 329 A1 bekannte Steckverbindung weist ein Innenteil und ein Außenteil auf, die miteinander verbunden und voneinander getrennt werden können. Das Innenteil ist mit einem Steckzapfen in eine Aufnahmebohrung des Außenteils einsteckbar und dort über ein in radialer Richtung verformbares Halteelement verriegelbar. Auf dem Steckzapfen ist axial verschiebbar eine Lösehülse angeordnet, die gegen die Kraft eines Federelements in eine Entriegelungsstellung bewegbar ist, in der das Halteelement aus der Verriegelungsstellung herausdrängbar ist und der Steckzapfen von dem Außenteil lösbar ist. Die Lösehülse hat eine Schulter mit einem konischen, sich entgegen der Steckrichtung nach außen erweiternden Abschnitt, an dem das Federelement mit radialer Vorspannung anliegt. Das Federelement kann ein O-Ring aus elastomerem Werkstoff sein, wobei der Innendurchmesser des O-Rings im entspannten Zustand 10 bis 30 % kleiner sein kann als der kleinste Außen-durchmesser der Lösehülse. Hierdurch kann mit niedriger Axialkraft ein Lösen der Steckverbindung bewirkt werden.

Bei einer aus EP 1 235 023 A1 bekannten Steckverbindung ist an der Lösehülse ein Dichtabschnitt angeordnet, der aus einem elastomeren, thermoplastischen Polymer besteht und um einen Flansch mit konischem Wandabschnitt der Löse-hülse herum gegossen und chemisch haftend an dem Flansch befestigt ist. Der Dichtabschnitt weist einen zwiebel- oder glockenartig geformten, radial nach innen geneigten Wandabschnitt auf, der mit seinem vorderen Ende an dem Außenteil anliegt. Beim Entriegeln der Steckverbindung wird der zwiebel- oder glockenartig geformte Wandabschnitt durch eine axiale Kraft zusammengedrückt und radial nach innen in eine Ausnehmung gefaltet, damit die Lösehülse in die Entriegelungsstellung gelangen kann.

EP 0 397 942 A1 beschreibt ein lösbares Schnellverbindungsstück, mit einem ringförmigen Einsatzteil mit einer Achse und einer ringförmigen Verriegelungsnut und einer ringförmigen Lösenut im äußeren Umfang davon, wobei die Verriegelungsnut eine Vorderseite hat, die nach außen und nach vorn in Bezug auf die besagte Achse abgeschrägt ist, und die besagte Lösenut einen kleineren Durchmesser als die besagte Verriegelungsnut aufweist.

Bei einer aus EP 0 932 789 B1 bekannten Steckverbindung ist ein ringförmiges Federelement aus elastomerem Material zwischen einer Endfläche des Außenteils und einer zur Längsachse des Steckzapfens rechtwinkligen Schulter der Lösehülse angeordnet. Dies hat zur Folge, dass das Federelement in axialer Richtung verformt werden muss, wenn die Lösehülse in die Entriegelungsstellung bewegt werden soll. Die Verformung in axialer Richtung ist mit einem relativ steilen Anstieg der Federkraft des Federelements verbunden. Das Entriegeln der Steckverbindung erfordert daher eine verhältnismäßig große Kraft, was als nachteilig angesehen wird.

Problematisch bei den bekannten Steckverbindungen ist die komplizierte und aufwendige Montage, die mehrere Bauteile erfordert. Außerdem ist für die Anbringung der Steckverbindung in einem Aggregat ein Adapterteil notwendig.

Der Erfindung liegt die Aufgabe zugrunde, eine Steckverbindung bereitzustellen, die in einfacher Weise und insbesondere ohne die Verwendung weiterer Bauteile in einer Aufnahme befestigbar ist.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass eine Steckverbindung für Rohrleitungen bereitgestellt wird, mit einem Steckteil und einem Aggregat mit einem Aufnahmeelement, die miteinander verbindbar und wieder trennbar sind, wobei das Steckteil an einem ersten, in eine Aufnahmebohrung des Aufnahmeelements einführbaren Ende einen Steckzapfen und einem zweiten Ende ein Anschlussende aufweist, mit dem das Steckteil mit einer Leitung verbindbar ist,
mit einem Federelement, das beim Einstecken eines freien Endes des Steckzapfens in die Aufnahmebohrung durch ein in der Aufnahmebohrung des Aufnahmeelements vorliegendes Abstreifelement aus einer Ruhenut in eine erste Rastnut auf dem Steckzapfen verschiebbar ist, wobei die erste Rastnut eine geringere Nuttiefe als die Ruhenut aufweist,
und mit einem Sicherungselement, das in einer Nut an einem dem freien Ende des Steckzapfens gegenüberliegenden Ende angeordnet ist und als Endanschlag für das Aufnahmeelement beim Einstecken dient, wobei das Sicherungselement entfernbar gestaltet ist, so dass nach Entfernen des Sicherungselements der Steckzapfen weiter in die Aufnahmebohrung bewegbar und das Federelement durch Anlage an dem Abstreifelement aus seiner ersten Rastnut in eine auf dem Steckteil vorliegende Lösenut bewegbar ist, deren Nuttiefe größer als die der ersten Rastnut ist, so dass der Steckzapfen aus der Aufnahmebohrung des Aufnahmeelements heraus bewegbar ist, wobei das Aufnahmeelement als Formbohrung mit der Aufnahmebohrung für das Steckteil in dem Aggregat vorliegt. Der Vorteil der erfindungsgemäßen Steckverbindung ist mitunter, dass diese einfach ohne weitere Bauteile, wie z. B. einem Haltering herstellbar ist und ohne die Notwendigkeit eines Werkzeuges wieder lösbar ist. Des Weiteren kann die Steckverbindung wiederverwendet werden. Die Steckverbindung ist als Einrastsystem ausgestaltet, das beim Vorliegen des Federelements in der ersten Rastnut dicht und betriebsbereit ist.

Es kann jedoch auch vorteilhaft sein, wenn die Steckverbindung als zweirastiges System ausgestaltet ist. In diesem Sinne ist es bevorzugt, dass durch weiteres Hineinstecken des freien Endes des Steckzapfens in die Aufnahmebohrung das Federelement durch Anlage an dem Abstreifelement aus der ersten Rastnut in eine benachbart zur ersten Rastnut liegenden zweiten Rastnut auf dem Steckzapfen verschiebbar ist, wobei die zweite Rastnut eine geringere Nuttiefe als die Ruhenut aufweist, wobei nach Entfernen des Sicherungselements der Steckzapfen weiter in die Aufnahmebohrung bewegbar und das Federelement durch Anlage an dem Abstreifelement aus seiner zweiten Rastnut in die auf dem Steckteil vorliegende Lösenut bewegbar ist, deren Nuttiefe größer als die der zweiten Rastnut ist, so dass der Steckzapfen aus der Aufnahmebohrung des Aufnahmeelements heraus bewegbar ist. Der Vorteil des zweirastigen Systems ist, dass die Steckverbindung im ersten Rastzustand zwar sicher gesteckt ist, aber noch eine definierte Leckage erlaubt. Hierdurch kann schnell und einfach erkannt werden, dass die Steckverbindung noch nicht vollständig gesteckt ist. Erst in der zweiten Rastposition ist die Ausgestaltung der Steckverbindung dann dicht und betriebsbereit.

In einer Ausgestaltung kann das Steckteil aus Kunststoff gefertigt sein. Hierdurch ist eine kostengünstige, aber auch stabile und leichte Steckverbindung bereitstellbar. Als Beispiel für einen Kunststoff seien hier glasfaserverstärkte Polyamide genannt.

In einer Ausgestaltung ist vorgesehen, dass das Federelement aus einem Federstahldraht besteht. Das so gefertigte Federelement ist biegsam, kann bis zur Elastizitätsgrenze ohne Rückstande verformt werden, weist aber eine hohe Festigkeit auf. Zudem können dem Federelement je nach Legierung verschiedenartige, auf die Anwendung gerichtete Eigenschaften vermittelt werden.

Um die Steckverbindung vor dem Eindringen von Schmutz zu schützen, kann der Steckzapfen an seiner dem Anschlussende zugewandten Seite, benachbart zum Sicherungselement einen in einer Nut angeordneten O-förmigen Dichtungsring aufweisen. Der O-Ring kann beispielsweise aus einem Elastomer gefertigt sein. Um die Raststufen optisch erkennbar zu gestalten, kann der O-Ring farbig gestaltet sein.

Damit die Steckverbindung gegenüber dem hindurchgeführten Betriebsfluid abgedichtet ist, kann der Steckzapfen an seinem der Aufnahmebohrung zugewandten Seite einen in einer Nut angeordneten O-förmigen Dichtungsring aufweisen. Auch dieser O-Ring kann aus einem Elastomer bestehen.

In einer Ausgestaltung ist vorgesehen, dass benachbart zur Nut, in der das Federelement in Ruheposition vorliegt, sich eine sich vom Steckzapfen in Richtung des Anschlussendes ansteigende Schulter befindet, die in die Nut, in der sich das Federelement in der ersten Rastposition befindet, abfällt. Durch die in der Ausgestaltung zwischen der Ruhenut und der ersten Rastnut vorliegenden Schulter wird das Federelement gespannt, so dass es nach Überquerung der Schulter quasi in die erste Rastnut schnappt. Hierdurch kann eine stabile Positionierung des Federelements in der Ruhenut als auch in der ersten Rastnut sichergestellt werden.

Des Weiteren kann es vorteilhaft sein, dass benachbart zur Nut, in der das Federelement in der ersten Rastposition vorliegt, eine sich vom Steckzapfen in Richtung des Anschlussendes ansteigende Schulter befindet, die in die Nut, in der sich das Federelement in der zweiten Rastposition befindet, abfällt. Auch hier kann durch die bevorzugte Gestaltung eine sichere Positionierung des Federelements in den Rastnuten sichergestellt werden.

Das Sicherungselement kann in einer Ausgestaltung als C-förmige Klammer aus einem Metall, Kunststoff oder einer Kombination hiervon gestaltet sein. Das Sicherungselement wird vorzugsweise in eine Nut im Steckzapfen eingeführt und dient als Endanschlag für das Aufnahmeelement. Nach der Entfernung des Sicherungselements kann die Steckverbindung getrennt werden. In einer bevorzugten Ausgestaltung besteht das Sicherungselement aus einem verstärktem, z. B. glasfaserverstärktem Kunststoff. Das Sicherungselement kann C-förmig gestaltet sein, wobei die Größe der Ausnehmung aus einem Ring zur Bildung des "C" derart angepasst ist, dass das Sicherungselement händig oder mit einem Werkzeug vom Steckzapfen entfernbar ist.

Es kann bevorzugt sein, dass das Abstreifelement in der Aufnahmebohrung des Aufnahmeelements durch einen Absatz in der Aufnahmebohrung gebildet ist. Die Aufnahmebohrung des Aufnahmeelements kann aufeinanderfolgende Stufen aufweisen, so dass sich der Innendurchmesser in Richtung des Steckzapfens stufenweise vergrößert. Hierdurch wird ein einfaches Einführen des Steckzapfens ermöglicht und zum anderen eine Zentrierung erreicht. Eine der vorhandenen Stufen, genauer deren in Richtung Steckteil weisende Stirnfläche kann in einer Ausgestaltung als Abstreifelement für das Federelement dienen.

In einer weiteren Ausgestaltung ist bevorzugt, dass das Aufnahmeelement in seiner Aufnahmebohrung eine Nut aufweist, deren zumindest eine Seitenwand das Abstreifelement für das Federelement formt. Alternativ zur oben ausgeführten Stirnfläche kann das Abstreifelement durch die Seitenwand einer Nut gebildet sein. Das Abstreifelement kann verschiedenartig realisiert sein und ist vorteilhafterweise als radiale Verengung im Aufnahmeelement ausgebildet, so dass das Federelement in der Ausgestaltung nur in einer definierten Position, insbesondere in der Lösenut, an dem Abstreifelement vorbeigeführt werden kann. Liegt das Federelement in der Ausgestaltung dagegen in einer Rastposition oder Ruheposition vor, gelangt es zur Anlage an dem Abstreifelement und wird axial verschoben.

Die Steckverbindung wird auch direkt, d. h. ohne Adapter mit dem Aggregat verbunden. Erfindungsgemäß liegt das Aufnahmeelement als Formbohrung in dem Aggregat vor und weist die entsprechende Aufnahmebohrung für das Steckteil auf. Erfindungsgemäß fungiert die Formbohrung als Aufnahmeelement, so dass das Steckteil direkt in die Formbohrung im Aggregat eingesteckt wird.

Dies hat erhebliche Vorteile, da ein Bauteil, nämlich der Adapter entfällt.

Um auch eine sichere Steckverbindung zu ermöglichen, wenn nur wenig Bauraum zur Verfügung steht oder es für eine Anwendung notwendig ist, kann das Steckteil als Winkelstecker gestaltet sein, so dass die Längsachse des Steckzapfens und die des Anschlussendes in einem Winkel größer oder kleiner als 180° zueinanderstehen. Je nach Bedarf, bzw. Anwendung kann der Winkelstecker in unterschiedlichen Winkeln angeboten werden.

Die Erfindung wird nachfolgend anhand von Ausführungsbeispielen der Erfindung näher erläutert, die in der Zeichnung dargestellt sind. Es zeigen
- Figur 1 bis Figur 5: Stecken einer zweirastigen Steckverbindung im Schnitt,
- Figur 6 bis Figur 8: Lösen einer zweirastigen Steckverbindung im Schnitt,
- Figur 9: Seiten- und Schnittansicht einer Ausgestaltung eines zweirastigen Winkelsteckers und
- Figur 10: halbseitige Schnittansicht einer Ausgestaltung einer einrastigen Steckverbindung.

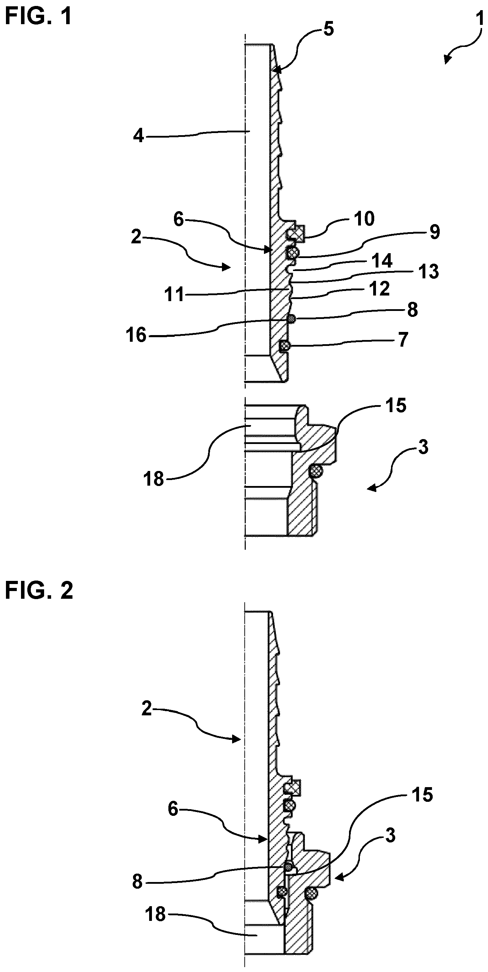

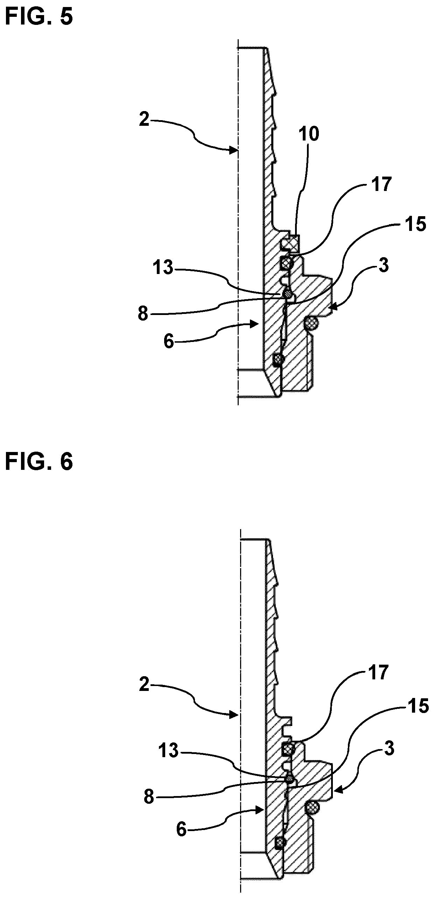

Die Figuren 1 bis 5 zeigen exemplarisch das Stecken einer Steckverbindung, wogegen das Lösen der Steckverbindung exemplarisch in den Figuren 6 bis Figur 8 dargestellt ist. Figur 1 zeigt exemplarisch eine Ausgestaltung der Steckverbindung 1 vor der Montage. Die Steckverbindung 1 umfasst neben einem Steckteil 2 ein Aufnahmeelement 3, die beide von einer Durchgangsbohrung 4 zur Durchführung eines Fluides durchzogen werden. Das Steckteil 2 weist an einem Ende ein Anschlussende 5 und an seinem anderen Ende einen Steckzapfen 6 auf. Das Anschlussende 5 kann beispielsweise ein Dornenprofil aufweisen und dient der Verbindung mit einer Leitung, durch die das Fluid in die Steckverbindung 1 und durch das Aufnahmeelement 3 in ein Aggregat, wie eine Heizung geleitet werden kann. Derartige Steckverbindungen 1 können im Fahrzeugbau zur Leitung von Fluiden Verwendung finden.

Der Steckzapfen 6 dient der Verbindung mit dem Aufnahmeelement 3, indem er zumindest teilweise in eine Aufnahmebohrung 18 des Aufnahmeelements 3 eingeführt wird. Auf der Umfangsfläche des Steckzapfens 6 ist in einer Nut ein erster O-Ring 7 aus z. B. einem Elastomer angeordnet, der im gesteckten Zustand gegen das Fluid abdichtet. Benachbart zum ersten O-Ring 7 liegt ein insbesondere ringförmiges Federelement 8 angeordnet vor. Dem Federelement 8 in Richtung des Anschlussendes 5 folgend, liegt ein zweiter O-Ring 9 in einer Nut, der die Steckverbindung 1 vor Eindringen von Schmutz schützt und aus einem Elastomer hergestellt sein kann. Zwischen dem zweiten O-Ring und dem sich anschließenden Anschlussendes 5 ist ein Sicherungselement 10 in Gestalt einer Klammer in einer hierfür vorgesehen Haltenut angeordnet. Benachbart zum zweiten O-Ring 9, insbesondere zwischen dem zweiten O-Ring 9 und dem Federelement 8 liegen zwei halbkreisförmige Nuten, zwischen denen sich Schulterbereiche 11 befinden. Die erste halbkreisförmige Nut, die sich axial zur Längsachse betrachtet, dem Federelement 8 anschließt, wird im Sinne der Erfindung als erste Rastnut 12 und die zweite hiernach folgende Nut als zweite Rastnut 13 bezeichnet. Zwischen der zweiten Rastnut 13 und dem zweiten O-Ring 9 liegt eine weitere halbkreisförmige Nut, deren Tiefe die der Rastnuten übersteigt und im Sinne der Erfindung als Lösenut 14 bezeichnet wird.

Das Aufnahmeelement 3 ist in der nicht erfindungsgemäßen Ausführungsform als separates Bauteil dargestellt. Erfindungsgemäß liegt das Aufnahmeelement in Gestalt einer Formbohrung in dem Aggregat vor. Das heißt, eine Formbohrung wird nach Vorgabe in dem Aggregat gesetzt, in die dann das Steckteil 2, genauer sein Steckzapfen 6 einbringbar ist.

Das Aufnahmeelement 3 weist eine Aufnahmebohrung 18 auf, die sich vom Steckteil 2 herkommend stufenweise radial verengen kann. Benachbart zu seiner Öffnung, in die der Steckzapfen 6 eingeführt wird, liegt eine radiale Verengung in Gestalt einer Schulter, die durch eine Einführschräge an der Öffnung und einer sich an die Schulter anschließenden Nut gebildet wird. Die der Schulter gegenüberliegende Seitenwand der Nut bildet ein Abstreifelement 15, die den Beginn der nachfolgenden radialen Verengung kennzeichnet. Hierauf folgt - zumindest in der dargestellten Ausgestaltung des Aufnahmeelements 3 - eine weitere Verengung, die durch eine ansteigende Rampe eingeleitet wird.

Im Auslieferungszustand der Steckverbindung 1 kann eine nicht dargestellte Schutzkappe auf dem Steckteil 2 vorgesehen sein, die zumindest teilweise das Steckteil 2 umgreift. Um ein Verrutschen des Federelements 8 beim Entfernen der Schutzkappe, beim Hantieren mit dem Steckteil 2 oder allgemein beim Transport zu verhindern, kann das Federelement 8 leicht vorgespannt in einer halbkreisförmigen Nut, die im Sinne der Erfindung auch als Ruhenut 16 bezeichnet wird, vorliegen. Die Nuttiefe der Ruhenut 16 ist vorteilhafterweise größer als die der ersten und insbesondere zweiten Rastnut 12, 13. Das heißt, der Steckzapfen 6 weist im Bereich der Ruhenut 16 einen geringeren Außendurchmesser oder eine geringere Ringbreite auf als im Bereich der ersten und insbesondere der zweiten Rastnut 12, 13.

Wird der Steckzapfen 6 mit seinem Ende in die Öffnung des Aufnahmeelements 3 geführt, passiert zwar der erste O-Ring 7 die in der Aufnahmebohrung 18 des Aufnahmeelements 3 liegende Schulter, aber es kommt bereits zu einer Weitung des Federelements 8, da es durch die Reibung mit der Schulter entlang des Steckzapfens 6 axial in Richtung Anschlussende 5 bewegt wird.

Wird der Steckzapfen 6 tiefer in das Aufnahmeelement 3 geschoben, gelangt der Steckzapfen 6 mit seinem Ende in den Bereich der Passung und wird zentriert. Außerdem gelangt das Federelement 8 zur Anlage an die, das Abstreifelement 15 bildende Seitenwand der Schulter folgenden Nut.

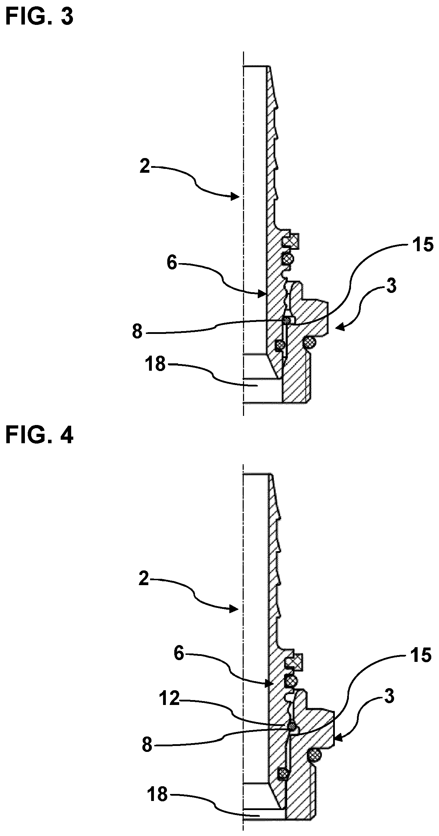

Das weitere Einschieben bewirkt, dass das Federelement 8 durch die Anlage an dem Abstreifelement 15 auf dem Steckzapfen 6 axial in Richtung der ersten Rastnut 12 verschoben und aufgrund des Schulterbereichs 11 geweitet wird. In Figur 4 liegt das Federelement in der ersten Rastnut 12. Das Federelement 8 kann in einer Ausgestaltung geweitet in der ersten Rastnut 12 vorliegen, da die Nuttiefe der ersten Rastnut 12 geringer als die der Ruhenut 16 gestaltet sein kann. In dieser ersten Rastposition ist die Steckverbindung verriegelt, erlaubt jedoch eine definierte Leckage. Diese Leckage ist z. B. durch ein auftretendes Pfeifgeräusch und/oder austretendes Betriebsfluid gekennzeichnet, so dass schnell erkannt werden kann, dass die Steckverbindung 1 noch nicht vollständig gesteckt ist. Eine weitere Möglichkeit, den Steckzustand zu signalisieren ist z. B., den zweiten O-Ring 9 farbig zu gestalten. Denn der zweite O-Ring 9 ist in der ersten Rastposition, bei der sich das Federelement 8 in der ersten Rastnut 12 befindet, vorteilhafterweise vollständig sichtbar.

Durch weiteres Bewegen des Steckzapfens 6 in die Aufnahmebohrung 18 des Aufnahmeelements 3 wird das Federelement 8 durch das Abstreifelement 15 über den zwischen der ersten und zweiten Rastnut 12, 13 liegenden Schulterbereich 11 gehoben und kommt schließlich in der zweiten Rastnut 13 zum Erliegen, in der sich das Federelement 8 zumindest bereichsweise gegen die prominente Seitenwand der Nut des Aufnahmeelements drückt, die dem Abstreifelement 15 gegenüberliegt. In dieser zweiten Rastposition des Federelements 8, die in Figur 5 exemplarisch gezeigt ist, ist eine axiale Bewegung des Steckteils 2 nicht mehr möglich. Das Herausbewegen des Steckzapfens 6 aus der Aufnahmebohrung 18 ist im Wesentlichen durch das Federelement 8 verhindert und ein Hineinschieben des Steckzapfens 6 in die Aufnahmebohrung 18 wird durch das Sicherungselement 10 verhindert, da dieses als Endanschlag für eine Stirnfläche 17 des Aufnahmeelements 3 dient. Die Steckverbindung 1 ist in der zweiten Rastposition dicht und betriebsbereit.

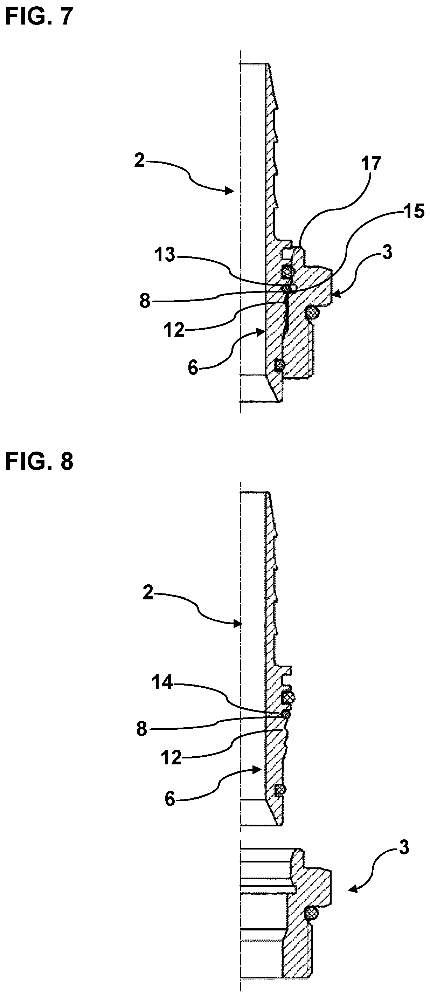

Um die Steckverbindung 1 zu lösen, wird das Sicherungselement 10 entweder händig oder mit einem Werkzeug entfernt, so dass der Anschlag für das Aufnahmeelement 3 entfällt und eine axiale Bewegung des Steckzapfens 6 in Richtung Aufnahmeelement 3 möglich wird. Bei der axialen Bewegung in Richtung Aufnahmeelement 3 wird das Federelement 8 durch Anlage an dem Abstreifelement 15 auf dem Steckzapfen 6 aus der zweiten Rastnut 13 gegebenenfalls über eine Schulter in die Lösenut 14 bewegt. Die Lösenut 14 ist derart gestaltet, dass ihre Nuttiefe größer als die der zweiten Rastnut 13 und insbesondere der ersten Rastnut 12 ist. Insbesondere ist der Außendurchmesser oder die Ringbreite des Steckzapfens 6 im Bereich der Lösenut 14 geringer als im Bereich der zweiten 13 und insbesondere ersten Rastnut 12. Hierdurch kann der Steckzapfen 6, genauer das Federelement 8 ohne zur Anlage an dem Abstreifelement 15 zu gelangen, tiefer in das Aufnahmeelement 3 bewegt werden oder an der durch die prominente Seitenwand der Nut des Aufnahmeelements 3 hervorgerufenen Schulter vorbei und aus der Aufnahmebohrung 18 des Aufnahmeelements 3 herausbewegt werden, siehe Figur 8.

Nach Herausnahme des Steckteils 2 kann das Sicherungselement 10 wieder in die Nut eingesteckt und das Federelement 8 zurück in seine Ruhenut 16 gebracht werden. Das Steckteil 2 ist dann wieder betriebsbereit.

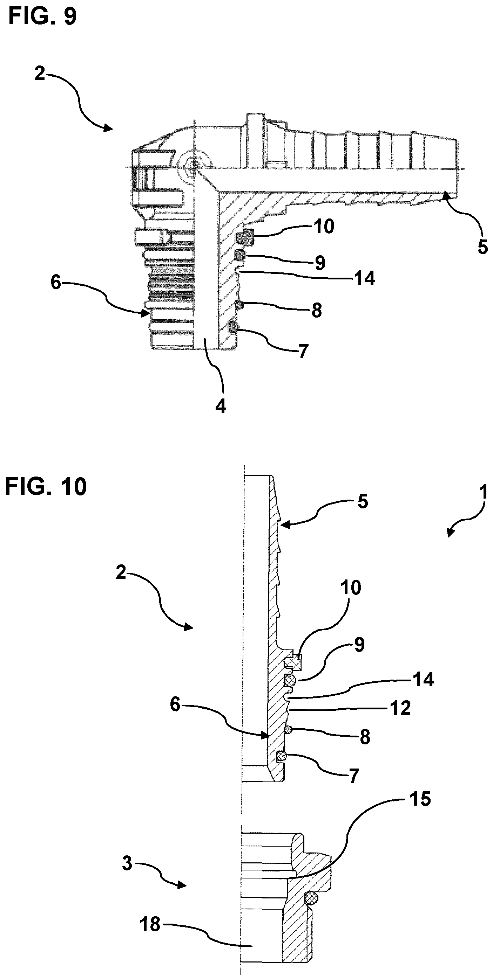

In Figur 9 ist eine alternative Ausgestaltung der Steckverbindung exemplarisch gezeigt. Die Steckverbindung 1 kann auch als Winkelstecker gestaltet sein, bei der die Längsachse des Steckzapfens 6 und die Längsachse des Anschlussendes 5 in einem Winkel von beispielsweise 90° zueinanderstehen. Selbstverständlich können Steckzapfen 6 und Anschlussende 5 auch in einem anderen Winkel wie beispielsweise, aber nicht abschließend 45° oder 135° zueinanderstehen.

In Figur 10 ist eine halbseitige Schnittansicht einer Ausgestaltung einer einrastigen Steckverbindung illustriert. Die Steckverbindung 1 kann in ihrer einfachsten Ausgestaltung als einrastige Steckverbindung 1 vorgesehen sein. Hierbei liegen die Bestandteile wie zuvor beschrieben auf dem Steckteil 2 bzw. dem Aufnahmeelement 3 vor, wobei auf dem Steckzapfen 6 nicht zwei Rastnuten vorgesehen sind, sondern lediglich eine Rastnut 12. Das Stecken erfolgt wie oben erläutert, wobei das Federelement 8, nachdem es an dem Abstreifelement 15 zur Anlage gelangt ist, aus der ersten Rastnut 12 in die Lösenut 14 bewegt wird. Zwischen der ersten Rastnut 12 und der Lösenut 14 kann eine Schulter vorgesehen sein, die in die Lösenut 14 über eine Rampe abfällt.

Wesentlicher Vorteil der Steckverbindung 1 ist deren minimalistischer Aufbau mit wenigen Bauteilen. Es werden keine Teile, wie Haltering oder dergleichen benötigt, die bei der Montage oder der Handhabung verloren gehen können.

## Patentansprüche

1. Steckverbindung (1) für Rohrleitungen, wobei die Steckverbindung ein Steckteil (2) und ein Aggregat mit einem Aufnahmeelement (3) aufweist, wobei das Steckteil (2) und das Aufnahmeelement (3) miteinander verbindbar und wieder trennbar sind, wobei das Steckteil (2) an einem ersten, in eine Aufnahmebohrung (18) des Aufnahmeelements (3) einführbaren Ende einen Steckzapfen (6) und einem zweiten Ende ein Anschlussende (5) aufweist, mit dem das Steckteil (2) mit einer Leitung verbindbar ist, mit einem Federelement (8), das beim Einstecken eines freien Endes des Steckzapfens (6) in die Aufnahmebohrung (18) durch ein in der Aufnahmebohrung (18) des Aufnahmeelements (3) vorliegendes Abstreifelement (15) aus einer Ruhenut (16) in eine erste Rastnut (12) auf dem Steckzapfen (6) verschiebbar ist, wobei die erste Rastnut (12) eine geringere Nuttiefe als die Ruhenut (16) aufweist,
und mit einem Sicherungselement (10), das in einer Nut an einem dem freien Ende des Steckzapfens (6) gegenüberliegenden Ende angeordnet ist und als Endanschlag für das Aufnahmeelement (3) beim Einstecken dient, wobei das Sicherungselement (10) entfernbar gestaltet ist, so dass nach Entfernen des Sicherungselements (10) der Steckzapfen (6) weiter in die Aufnahmebohrung (18) bewegbar und das Federelement (8) durch Anlage an dem Abstreifelement (15) aus seiner ersten Rastnut (12) in eine auf dem Steckteil (2) vorliegende Lösenut (14) bewegbar ist, deren Nuttiefe größer als die der ersten Rastnut (12) ist, so dass der Steckzapfen (6) aus der Aufnahmebohrung (18) des Aufnahmeelements (3) heraus bewegbar ist, wobei das Aufnahmeelement (3) als Formbohrung mit der Aufnahmebohrung (18) für das Steckteil (2) in dem Aggregat vorliegt.

2. Steckverbindung (1) nach Anspruch 1, **dadurch gekennzeichnet, dass** durch weiteres Hineinstecken des freien Endes des Steckzapfens (6) in die Aufnahmebohrung (18) das Federelement (8) durch Anlage an dem Abstreifelement (15) aus der ersten Rastnut (12) in eine benachbart zur ersten Rastnut (12) liegenden zweiten Rastnut (13) auf dem Steckzapfen (6) verschiebbar ist, wobei die zweite Rastnut (13) eine geringere Nuttiefe als die Ruhenut (16) aufweist, wobei nach Entfernen des Sicherungselements (10) der Steckzapfen (6) weiter in die Aufnahmebohrung (18) bewegbar und das Federelement (8) durch Anlage an dem Abstreifelement (15) aus seiner zweiten Rastnut (13) in die auf dem Steckteil (2) vorliegende Lösenut (14) bewegbar ist, deren Nuttiefe größer als die der zweiten Rastnut (13) ist, so dass der Steckzapfen (6) aus der Aufnahmebohrung (18) des Aufnahmeelements (3) heraus bewegbar ist.

3. Steckverbindung (1) nach einem der vorhergehenden Ansprüche, **dadurch gekennzeichnet, dass** das Steckteil (2) aus Kunststoff gefertigt ist.

4. Steckverbindung (1) nach einem der vorhergehenden Ansprüche, **dadurch gekennzeichnet, dass** das Federelement (8) aus einem Federstahldraht besteht.

5. Steckverbindung (1) nach einem der vorhergehenden Ansprüche, **dadurch gekennzeichnet, dass** der Steckzapfen (6) an seiner dem Anschlussende (5) zugewandten Seite, benachbart zum Sicherungselement (10) einen in einer Nut angeordneten O-ringförmigen Dichtungsring (9) aufweist.

6. Steckverbindung (1) nach einem der vorhergehenden Ansprüche, **dadurch gekennzeichnet, dass** der Steckzapfen (6) an seinem der Aufnahmebohrung (18) zugewandten Seite einen in einer Nut angeordneten O-ringförmigen Dichtungsring (7) aufweist.

7. Steckverbindung (1) nach einem der vorhergehenden Ansprüche 3 bis 6, **dadurch gekennzeichnet, dass** sich benachbart zur Ruhenut (16) eine sich vom Steckzapfen (6) in Richtung des Anschlussendes (5) ansteigende Schulter befindet, die in die erste Rastnut (12) abfällt.

8. Steckverbindung (1) nach Anspruch 2, **dadurch gekennzeichnet, dass** sich benachbart zur ersten Rastnut (12) eine sich vom Steckzapfen (6) in Richtung des Anschlussendes (5) ansteigende Schulter befindet, die in die zweite Rastnut (13) abfällt.

9. Steckverbindung (1) nach einem der vorhergehenden Ansprüche, **dadurch gekennzeichnet, dass** das Sicherungselement (10) als C-förmige Klammer aus einem Metall, Kunststoff oder einer Kombination hiervon gestaltet ist.

10. Steckverbindung (1) nach einem der vorhergehenden Ansprüche, **dadurch gekennzeichnet, dass** das Abstreifelement (15) in der Aufnahmebohrung (18) des Aufnahmeelements (3) durch einen Absatz in der Aufnahmebohrung (18) gebildet ist.

11. Steckverbindung (1) nach einem der vorhergehenden Ansprüche, **dadurch gekennzeichnet, dass** das Steckteil (2) als Winkelstecker gestaltet ist, so dass die Längsachse des Steckzapfens (6) und die des Anschlussendes (5) in einem Winkel größer oder kleiner als 180° zueinanderstehen.

12. Steckverbindung (1) nach einem der vorhergehenden Ansprüche, **dadurch gekennzeichnet, dass** das Aufnahmeelement (3) in seiner Aufnahmebohrung (18) eine Nut aufweist, deren zumindest eine Seitenwand das Abstreifelement (15) für das Federelement (8) formt.

## Claims

1. A plug connection (1) for pipe lines, wherein the plug connection comprises a plug part (2) and an assembly having a receiving element (3), wherein the plug part (2) and the receiving element (3) are connectable to and disconnectable from one another, wherein the plug part (2), at a first end insertable into a receiving bore (18) of the receiving element (3), comprises a plug spigot (6) and, at a second end, comprises a connection end (5), by means of which the plug part (2) is connectable to a line, a spring element (8), which, upon insertion of a free end of the plug spigot (6) into the receiving bore (18), is displaceable from a rest groove (16) into a first latching groove (12) provided on the plug spigot (6) by means of a stripper element (15) present in the receiving bore (18) of the receiving element (3), wherein the first latching groove (12) has a smaller groove depth than the rest groove (16), and a securing element (10), which is arranged in a groove at an end opposite the free end of the plug spigot (6) and serves as an end stop for the receiving element (3) upon insertion, wherein the securing element (10) is configured to be removable, such that, after removal of the securing element (10), the plug spigot (6) is movable further into the receiving bore (18), and the spring element (8), by contact with the stripper element (15), is movable from its first latching groove (12) into a release groove (14) provided on the plug part (2), the release groove (14) having a greater groove depth than the first latching groove (12), such that the plug spigot (6) is movable out of the receiving bore (18) of the receiving element (3), wherein the receiving element (3) is provided in the assembly in the form of a formed bore having the receiving bore (18) for the plug part (2).

2. The plug connection (1) according to claim 1, **characterized in that**, by further inserting the free end of the plug spigot (6) into the receiving bore (18), the spring element (8), by contact with the stripper element (15), is displaceable from the first latching groove (12) into a second latching groove (13) provided on the plug spigot (6) and located adjacent to the first latching groove (12), wherein the second latching groove (13) has a smaller groove depth than the rest groove (16), wherein, after removal of the securing element (10), the plug spigot (6) is movable further into the receiving bore (18), and the spring element (8), by contact with the stripper element (15), is movable from its second latching groove (13) into the release groove (14) provided on the plug part (2), the release groove (14) having a greater groove depth than the second latching groove (13), such that the plug spigot (6) is movable out of the receiving bore (18) of the receiving element (3).

3. The plug connection (1) according to any one of the preceding claims, **characterized in that** the plug part (2) is made of plastic.

4. The plug connection (1) according to any one of the preceding claims, **characterized in that** the spring element (8) consists of spring steel wire.

5. The plug connection (1) according to any one of the preceding claims, **characterized in that** the plug spigot (6), at a side thereof facing the connection end (5), adjacent to the securing element (10), comprises an O-ring-shaped sealing ring (9) arranged in a groove.

6. The plug connection (1) according to any one of the preceding claims, **characterized in that** the plug spigot (6), at a side thereof facing the receiving bore (18), comprises an O-ring-shaped sealing ring (7) arranged in a groove.

7. The plug connection (1) according to any one of claims 3 to 6, **characterized in that** a rising shoulder is located adjacent to the rest groove (16), the shoulder rising from the plug spigot (6) in the direction of the connection end (5) and sloping down into the first latching groove (12).

8. The plug connection (1) according to claim 2, **characterized in that** a rising shoulder is located adjacent to the first latching groove (12), the shoulder rising from the plug spigot (6) in the direction of the connection end (5) and sloping down into the second latching groove (13).

9. The plug connection (1) according to any one of the preceding claims, **characterized in that** the securing element (10) is configured as a C-shaped clip made of metal, plastic, or a combination thereof.

10. The plug connection (1) according to any one of the preceding claims, **characterized in that** the stripper element (15) is formed in the receiving bore (18) of the receiving element (3) by a step in the receiving bore (18).

11. The plug connection (1) according to any one of the preceding claims, **characterized in that** the plug part (2) is configured as an angled plug, such that the longitudinal axis of the plug spigot (6) and that of the connection end (5) extend at an angle greater than or less than 180° to one another.

12. The plug connection (1) according to any one of the preceding claims, **characterized in that** the receiving element (3), in its receiving bore (18), comprises a groove, at least one side wall of which forms the stripper element (15) for the spring element (8).

## Revendications

1. Raccord enfichable (1) pour des conduites tubulaires, le raccord enfichable comportant un élément enfichable (2) et un groupe comportant un élément de réception (3), l'élément enfichable (2) et l'élément de réception (3) pouvant être reliés l'un à l'autre et à nouveau séparés, l'élément enfichable (2) présentant, à une première extrémité pouvant être introduite dans un alésage de réception (18) de l'élément de réception (3), un embout d'enfichage (6) et, à une deuxième extrémité, une extrémité de raccordement (5) au moyen de laquelle l'élément enfichable (2) peut être relié à une conduite,
avec un élément ressort (8) qui, lors de l'insertion d'une extrémité libre de l'embout d'enfichage (6) dans l'alésage de réception (18), peut être déplacé, par un élément racleur (15) présent dans l'alésage de réception (18) de l'élément de réception (3), depuis une gorge de repos (16) jusque dans une première gorge d'encliquetage (12) sur l'embout d'enfichage (6), la première gorge d'encliquetage (12) présentant une profondeur de gorge inférieure à celle de la gorge de repos (16),
et avec un élément de sécurité (10) qui est disposé dans une gorge à une extrémité opposée à l'extrémité libre de l'embout d'enfichage (6) et sert de butée de fin de course pour l'élément de réception (3) lors de l'insertion, l'élément de sécurité (10) étant conçu pour pouvoir être retiré, de sorte qu'après retrait de l'élément de sécurité (10), l'embout d'enfichage (6) peut être déplacé plus profondément dans l'alésage de réception (18) et l'élément ressort (8) peut être déplacé, par appui contre l'élément racleur (15), depuis sa première gorge d'encliquetage (12) jusque dans une gorge de libération (14) présente sur l'élément enfichable (2), dont la profondeur de gorge est supérieure à celle de la première gorge d'encliquetage (12), de sorte que l'embout d'enfichage (6) peut être déplacé hors de l'alésage de réception (18) de l'élément de réception (3), l'élément de réception (3) se présentant dans le groupe sous la forme d'un alésage profilé avec l'alésage de réception (18) pour l'élément enfichable (2).

2. Raccord enfichable (1) selon la revendication 1, **caractérisé en ce que**, par une insertion plus profonde de l'extrémité libre de l'embout d'enfichage (6) dans l'alésage de réception (18), l'élément ressort (8) peut être déplacé, par appui contre l'élément racleur (15), depuis la première gorge d'encliquetage (12) jusque dans une deuxième gorge d'encliquetage (13) située sur l'embout d'enfichage (6) et adjacente à la première gorge d'encliquetage (12), la deuxième gorge d'encliquetage (13) présentant une profondeur de gorge inférieure à celle de la gorge de repos (16), l'embout d'enfichage (6) pouvant, après retrait de l'élément de sécurité (10), être déplacé plus profondément dans l'alésage de réception (18) et l'élément ressort (8) pouvant être déplacé, par appui contre l'élément racleur (15), depuis sa deuxième gorge d'encliquetage (13) jusque dans la gorge de libération (14) présente sur l'élément enfichable (2), dont la profondeur de gorge est supérieure à celle de la deuxième gorge d'encliquetage (13), de sorte que l'embout d'enfichage (6) peut être déplacé hors de l'alésage de réception (18) de l'élément de réception (3).

3. Raccord enfichable (1) selon l'une des revendications précédentes, **caractérisé en ce que** l'élément enfichable (2) est fabriqué en matière plastique.

4. Raccord enfichable (1) selon l'une des revendications précédentes, **caractérisé en ce que** l'élément ressort (8) est constitué d'un fil en acier à ressort.

5. Raccord enfichable (1) selon l'une des revendications précédentes, **caractérisé en ce que** l'embout d'enfichage (6) comporte, sur son côté tourné vers l'extrémité de raccordement (5), en position adjacente à l'élément de sécurité (10), un joint d'étanchéité torique (9) disposé dans une gorge.

6. Raccord enfichable (1) selon l'une des revendications précédentes, **caractérisé en ce que** l'embout d'enfichage (6) comporte, sur son côté tourné vers l'alésage de réception (18), un joint d'étanchéité torique (7) disposé dans une gorge.

7. Raccord enfichable (1) selon l'une des revendications précédentes 3 à 6, **caractérisé en ce qu'**il se trouve, en position adjacente à la gorge de repos (16), un épaulement s'élevant à partir de l'embout d'enfichage (6) en direction de l'extrémité de raccordement (5) et retombant dans la première gorge d'encliquetage (12).

8. Raccord enfichable (1) selon la revendication 2, **caractérisé en ce qu'**il se trouve, en position adjacente à la première gorge d'encliquetage (12), un épaulement s'élevant à partir de l'embout d'enfichage (6) en direction de l'extrémité de raccordement (5) et retombant dans la deuxième gorge d'encliquetage (13).

9. Raccord enfichable (1) selon l'une des revendications précédentes, **caractérisé en ce que** l'élément de sécurité (10) est conçu sous la forme d'une agrafe en forme de C constituée d'un métal, de matière plastique ou d'une combinaison de ceux-ci.

10. Raccord enfichable (1) selon l'une des revendications précédentes, **caractérisé en ce que** l'élément racleur (15) est formé, dans l'alésage de réception (18) de l'élément de réception (3), par un décrochement dans l'alésage de réception (18).

11. Raccord enfichable (1) selon l'une des revendications précédentes, **caractérisé en ce que** l'élément enfichable (2) est conçu sous la forme d'un raccord coudé, de sorte que l'axe longitudinal de l'embout d'enfichage (6) et celui de l'extrémité de raccordement (5) forment entre eux un angle supérieur ou inférieur à 180°.

12. Raccord enfichable (1) selon l'une des revendications précédentes, **caractérisé en ce que** l'élément de réception (3) comporte, dans son alésage de réception (18), une gorge dont au moins une paroi latérale forme l'élément racleur (15) pour l'élément ressort (8).
